# EUROPEAN PATENT APPLICATION

(11) **EP 3 839 557 A1**
(43) Date of publication of application: **23.06.2021**
(21) Application number: 19851689.0
(22) Date of filing: 05.06.2019
(51) Int. Cl.: G01S 7/497, G01S 17/02, G01S 17/08

(54) **CALIBRATION METHOD, CALIBRATION CONTROLLER, AND CALIBRATION SYSTEM**

(30) Priority: 22.08.2018 CN 201810963379
(71) Applicant: GUANGDONG OPPO MOBILE TELECOMMUNICATIONS CORP., LTD., Wusha, Chang'an Dongguan Guangdong 523860 (CN)
(72) Inventor: WEI, Yi, Dongguan Guangdong 523860 (CN)
(74) Representative: Manitz Finsterwald Patent- und Rechtsanwaltspartnerschaft mbB
(86) International application number: PCT/CN2019/090072
(87) International publication number: WO 2020/038058

(57) **Abstract**

A calibration method for a time-of-flight module (300), a calibration controller (806), and a calibration system (1000). The time-of-flight module (300) comprises a light transmitter (100) and a light detector (63). The light transmitter (100) comprises a light source (10). The time-of-flight module (300) is disposed on an electronic device (800). The electronic device (800) comprises an optical element. The calibration method comprises: controlling the light source (10) to emit a light signal under a predetermined operating current (02); and controlling the light detector (63) to receive the light signal reflected by the optical element so as to form a calibration electrical signal (03).

## Description

### CROSS-REFERENCE TO RELATED APPLICATION(S)

This application claims a priority and a right to Chinese Patent Application No. 201810963379.4, and filed with China National Intellectual Property Administration on August 22, 2018, the entire contents of which are incorporated herein by reference.

### FIELD

The disclosure relates to a field of three-dimensional image technologies, and more particularly to a calibration method, a calibration controller and a calibration system.

### BACKGROUND

A time of flight (TOF) module may calculate depth information of a measured object by calculating a time difference between a time point at which a light emitter emits an optical signal and a time point at which a light receiver receives the optical signal

### SUMMARY

Embodiments of the disclosure provide a calibration method, a calibration controller and a calibration system.

Implementations of the disclosure disclose a method for calibrating a time-of-flight module. The time-of-flight module includes a light emitter and a light detector. The light emitter includes a light source. The time-of-flight module is disposed on an electronic device. The electronic device includes an optical element. The method includes: controlling the light source to emit optical signals at a predetermined working current; and controlling the light detector to receive the optical signals reflected by the optical element to form calibration electrical signals.

Implementations of the disclosure disclose a calibration controller, which is applied to a time-of-flight module. The time-of-flight module includes a light emitter and a light detector. The light emitter includes a light source. The time-of-flight module is disposed on an electronic device. The electronic device includes an optical element. The calibration controller is configured to: control the light source to emit optical signals at a predetermined working current; and control the light detector to receive the optical signals reflected by the optical element to form calibration electrical signals.

Implementations of the disclosure disclose a calibration system. The calibration system includes a time-of-flight module, an electronic device and a calibration controller. The time-of-flight module includes a light emitter and a light detector. The electronic device has the time-of-flight module disposed thereon, and includes an optical element. The calibration controller is configured to: control the light source to emit optical signals at a predetermined working current; and control the light detector to receive the optical signals reflected by the optical element to form calibration electrical signals.

Additional aspects and advantages of the disclosure may be set forth in part in the following description, and may become obvious in part from the following description, or may be learned by practice of the disclosure.

### BRIEF DESCRIPTION OF THE DRAWINGS

The above and/or additional aspects and advantages of the disclosure will become more apparent and be understood more easily with reference to accompanying drawings and descriptions for implementations, in which:
FIG. 1 is a schematic diagram illustrating a three-dimensional structure of a calibration system according to some implementations of the disclosure;
FIG. 2 is a schematic diagram illustrating a light emitter of a time-of-flight module according to some implementations of the disclosure;
FIG. 3-FIG. 9 are flow charts illustrating a method for calibrating a time-of-flight module according to some implementations of the disclosure;
FIG. 10 is a schematic diagram illustrating an arrangement of light emitting elements of a time-of-flight module according to some implementations of the disclosure;
FIG. 11-FIG. 12 are flow charts illustrating a method for calibrating a time-of-flight module according to some implementations of the disclosure;
FIG. 13 and FIG. 14 are schematic diagrams illustrating an arrangement of light emitting elements of a time-of-flight module according to some implementations of the disclosure;
FIG. 15 is a schematic diagram illustrating a three-dimensional structure of an electronic device according to some implementations of the disclosure;
FIG. 16 is a schematic diagram illustrating a three-dimensional structure of a time-of-flight module according to some implementations of the disclosure;
FIG. 17 is a schematic diagram illustrating a plane structure of a time-of-flight module according to some implementations of the disclosure; and
Fig. 18 is a schematic diagram illustrating a cross section of a time-of-flight module along a line XVIII-XVIII in FIG. 17.

### DETAILED DESCRIPTION

Description will be made in detail below to embodiments of the disclosure. Examples of those embodiments are illustrated in accompanying drawings. Same or similar reference numerals refer to same or similar elements or elements having same or similar functions throughout. The embodiments described below with reference to the accompanying drawings are exemplary and are intended to explain the disclosure, and should not be construed as a limitation of the disclosure.

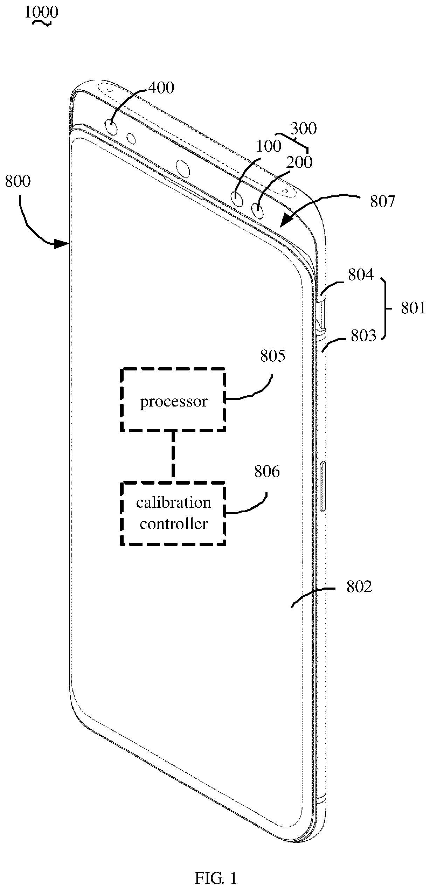

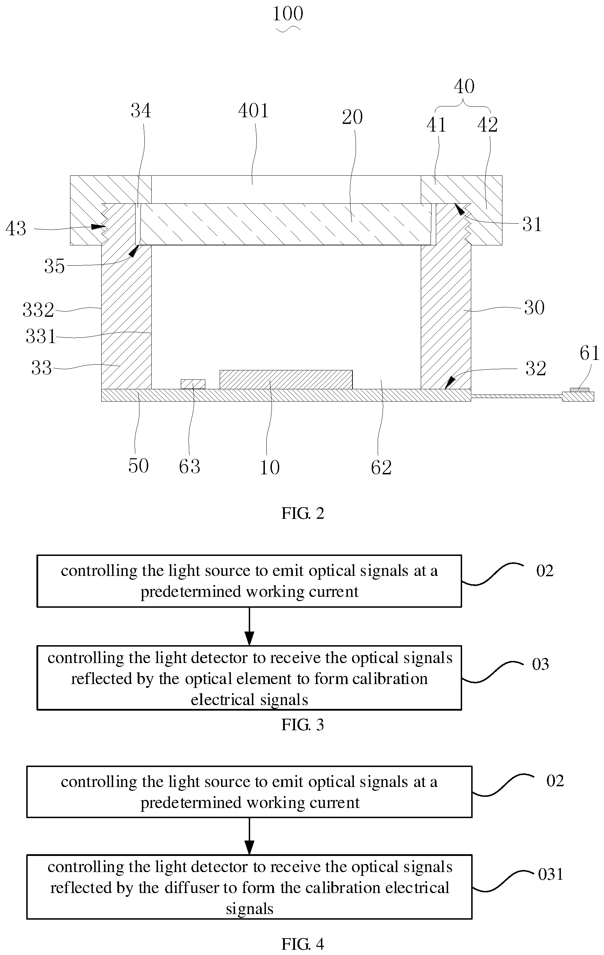

Please refer to FIG. 1 and FIG. 2 together. The disclosure provides a method for calibrating a time-of-flight module 300. The time-of-flight module 300 includes a light emitter 100 and a light detector 63, and the light emitter 100 includes a light source 10. The time-of-flight module 300 is disposed on an electronic device 800. The electronic device 800 includes an optical element. The method includes: controlling the light source 10 to emit optical signals at a predetermined working current; and controlling the light detector 63 to receive the optical signals reflected by the optical element to form calibration electrical signals.

Please refer to FIG. 2. In some implementations, the optical element includes a diffuser 20 of the light emitter 100. The controlling the light detector 63 to receive the optical signals reflected by the optical element to form the calibration electrical signals includes: controlling the light detector 63 to receive the optical signals reflected by the diffuser 20 to form the calibration electrical signals.

Please refer to FIG. 2. In some implementations, the optical element includes the diffuser 20 of the light emitter 100 and a protective cover 40. The controlling the light detector 63 to receive the optical signals reflected by the optical element to form the calibration electrical signals includes: controlling the light detector 63 to receive the optical signals reflected by the diffuser 20 and the protective cover 40 to form the calibration electrical signals.

Please refer to FIG. 1 and FIG. 2 together. In some implementations, the optical element includes the diffuser 20 of the light emitter 100 and a cover plate 807. The controlling the light detector 63 to receive the optical signals reflected by the optical element to form the calibration electrical signals includes: controlling the light detector to receive the optical signals reflected by the diffuser and the cover plate to form the calibration electrical signals.

Please refer to FIG. 1 and FIG. 2 together. In some implementations, the optical element includes the diffuser 20 of the light emitter 100, the protective cover 40, and the cover plate 807. The controlling the light detector 63 to receive the optical signals reflected by the optical element to form the calibration electrical signals includes: controlling the light detector 63 to receive the optical signals reflected by the diffuser 20, the protective cover 40, and the cover plate 807 to form the calibration electrical signals.

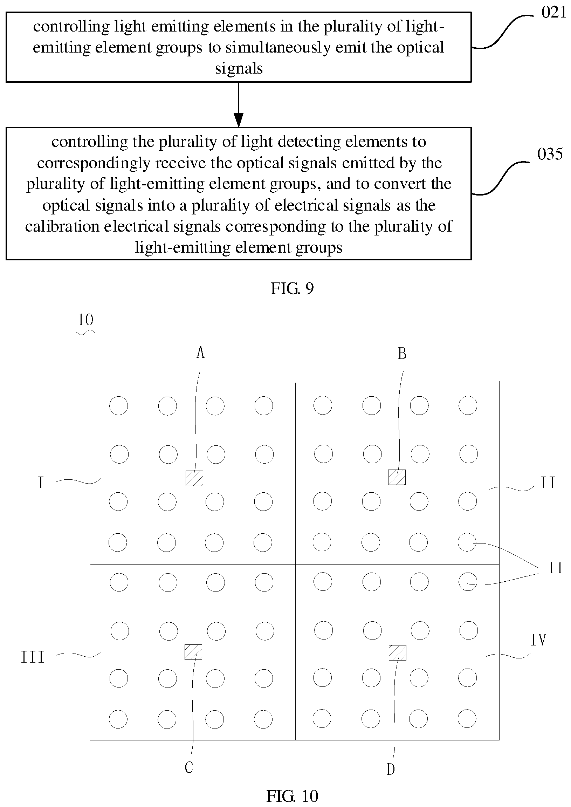

Please refer to FIG. 2 and FIG. 10 together. In some implementations, the light emitter 100 includes multiple light emitting elements 11. The multiple light emitting elements 11 are divided into multiple light-emitting element groups. The light detector 63 includes multiple light detecting elements each corresponding to each light-emitting element group. The controlling the light source 10 to emit the optical signals at the predetermined working current includes: controlling light emitting elements 11 in the multiple light-emitting element groups to simultaneously emit the optical signals. The controlling the light detector 63 to receive the optical signals reflected by the optical element to form the calibration electrical signals includes: controlling the multiple light detecting elements to correspondingly receive the optical signals emitted by the multiple light-emitting element groups, and to convert the optical signals into the multiple electrical signals as the calibration electrical signals corresponding to the multiple light-emitting element groups.

Please refer to FIG. 2 and FIG. 10 together. In some implementations, the light emitter 100 includes multiple light emitting elements 11. The multiple light emitting elements 11 are divided into multiple light-emitting element groups. The light detector 63 includes multiple light detecting elements each corresponding to each light-emitting element group. The controlling the light source 10 to emit the optical signals at the predetermined working current includes: controlling light emitting elements 11 in the multiple light-emitting element groups to respectively emit the optical signals at different times. The controlling the light detector 63 to receive the optical signals reflected by the optical element to form the calibration electrical signals includes: controlling the multiple light detecting elements to be turned on sequentially, and each light detecting element is turned on in response to turning on of the corresponding light-emitting element group, and controlling each turned on light detecting element to receive the optical signals emitted by the light emitting elements 11 in the turned on light-emitting element group, and to convert the optical signals into an electrical signal as the calibration electrical signal corresponding to the light-emitting element group.

Please refer to FIG. 2 and FIG. 10 together. In some implementations, the light emitter 100 includes multiple light emitting elements 11. The multiple light emitting elements 11 are divided into multiple light-emitting element groups. The light detector 63 includes multiple light detecting elements each corresponding to each light-emitting element group. The controlling the light source 10 to emit the optical signals at the predetermined working current includes: controlling light emitting elements in the multiple light-emitting element groups to respectively emit the optical signals at different times. The controlling the light detector 63 to receive the optical signals reflected by the optical element 11 to form the calibration electrical signals includes: controlling the multiple light detecting elements to be turned on simultaneously and to sequentially receive the optical signals each group emitted by the light emitting elements 11 in the turned on light-emitting element group, and to convert the optical signals into multiple electrical signals; and obtaining the calibration electrical signal corresponding to each light-emitting element group based on the multiple electrical signals each corresponding to each light-emitting element group and a weight corresponding to each electrical signal.

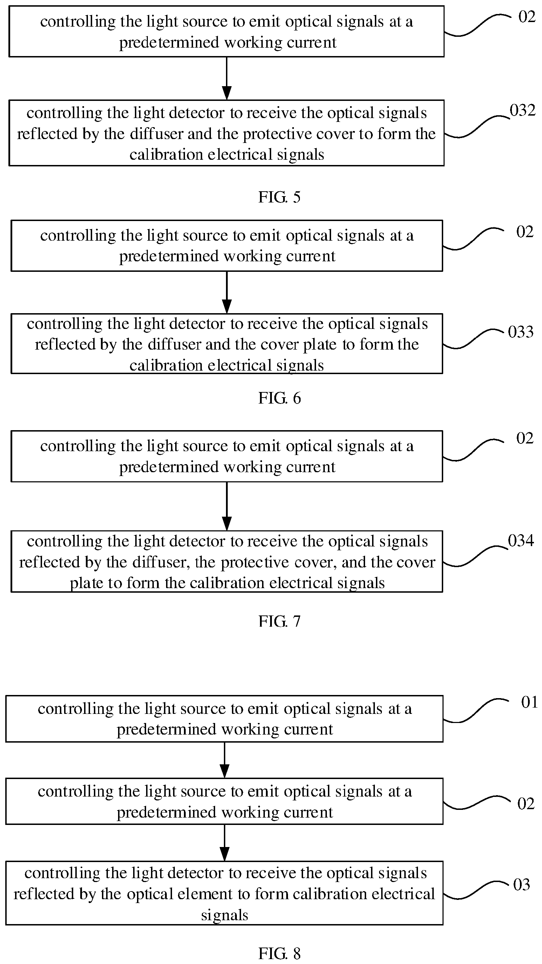

Please refer to FIG. 8. In some implementations, before controlling the light source 10 to emit the optical signals at the predetermined working current, the method also includes: calculating the predetermined working current based on a preset distance.

Please refer to FIG. 1 and FIG. 2. The disclosure also provides a calibration controller 806 for the time-of-flight module 300. The time-of-flight module 300 includes a light emitter 100 and a light detector 63. The light emitter 100 includes a light source 10. The time-of-flight module 300 is disposed on an electronic device 800. The electronic device 800 includes an optical element. The calibration controller 805 may be configured to: control the light source 10 to emit optical signals at a predetermined working current; and control the light detector 63 to receive the optical signals reflected by the optical element to form calibration electrical signals.

Please refer to FIG. 1 and FIG. 2 together. In some implementations, the optical element includes a diffuser 20 of the light emitter 100. The calibration controller 806 may also be configured to control the light detector 63 to receive the optical signals reflected by the diffuser 20 to form the calibration electrical signals.

Please refer to FIG. 1 and FIG. 2 together. In some implementations, the optical element includes the diffuser 20 of the light emitter 100 and a protective cover 40. The calibration controller 806 may also be configured to control the light detector 63 to receive the optical signals reflected by the diffuser 20 and the protective cover 40 to form the calibration electrical signals.

Please refer to FIG. 1 and FIG. 2 together. In some implementations, the optical element includes the diffuser 20 of the light emitter 100 and a cover plate 807. The calibration controller 806 may also be configured to control the light detector 63 to receive the optical signals reflected by the diffuser 20 and the cover plate 807 to form the calibration electrical signals.

Please refer to FIG. 1 and FIG. 2 together. In some implementations, the optical element includes the diffuser 20 of the light emitter 100, the protective cover 40, and the cover plate 807. The calibration controller 806 may also be configured to control the light detector 63 to receive the optical signals reflected by the diffuser 20, the protective cover 40, and the cover plate 807 to form the calibration electrical signals.

Please refer to FIG. 1, FIG. 2 and FIG. 10 together. In some implementations, the light emitter 100 includes multiple light emitting elements 11. The multiple light emitting elements 11 are divided into multiple light-emitting element groups. The light detector 63 includes multiple light detecting elements each corresponding to each light-emitting element group. The calibration controller 806 may be configured to control light emitting elements 11 in the multiple light-emitting element groups to simultaneously emit the optical signals; and control the multiple light detecting elements to correspondingly receive the optical signals emitted by the multiple light-emitting element groups, and to convert the optical signals into multiple electrical signals as the calibration electrical signals corresponding to the multiple light-emitting element groups.

Please refer to FIG. 2 and FIG. 10 together. In some implementations, the light emitter 100 comprises multiple light emitting elements 11. The multiple light emitting elements 11 are divided into multiple light-emitting element groups. The light detector 63 includes multiple light detecting elements each corresponding to each light-emitting element group. The calibration controller 806 may be configured to: control light emitting elements 11 in the multiple light-emitting element groups to respectively emit the optical signals at different times; and control the multiple the light detecting elements to be turned on sequentially, and each light detecting element is turned on in response to turning on of the corresponding light-emitting element group, and to receive the optical signals emitted by the light emitting elements 11 in the turned on light-emitting element group, and to convert the optical signals into an electrical signal as the calibration electrical signal corresponding to the light-emitting element group.

Please refer to FIG. 1, FIG. 2 and FIG. 10 together. In some implementations, the light emitter 100 includes multiple light emitting elements 11. The multiple light emitting elements 11 are divided into multiple light-emitting element groups. The light detector 63 includes multiple light detecting elements each corresponding to each light-emitting element group. The calibration controller 806 may be configured to: control light emitting elements 11 in the multiple light-emitting element groups to respectively emit the optical signals at different times; control the multiple light detecting elements to be turned on simultaneously and to sequentially receive the optical signals each group emitted by the light emitting elements in the turned on light-emitting element group, and to convert the optical signals into multiple electrical signals; and obtain the calibration electrical signal corresponding to each light-emitting element group based on the multiple electrical signals each corresponding to each light-emitting element group and a weight corresponding to each electrical signal.

Please refer to FIG. 1. In some implementations, the calibration controller 806 may be configured to: calculate the predetermined working current based on a preset distance.

Please refer to FIG. 1. The disclosure also provides a calibration system 1000. The calibration system 1000 includes a time-of-flight module 300, an electronic device 800 and a calibration controller 806. The time-of-flight module 300 includes a light emitter 100 and a light detector 200. The time-of-flight module 300 is disposed on the electronic device 800. The electronic device 800 includes an optical element. The calibration controller 806 may be configured to control a light source 10 to emit optical signals at a predetermined working current, and to control the light detector 63 to receive optical signals reflected by the optical element to form calibration electrical signals.

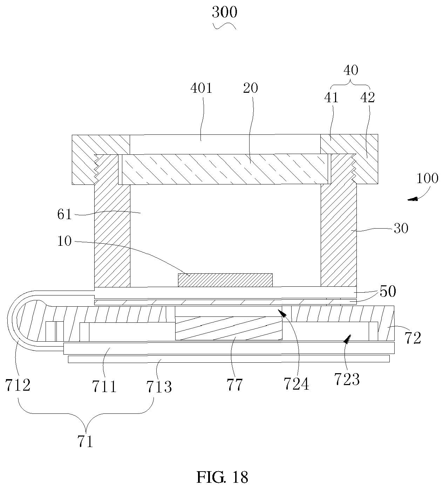

Please refer to FIG. 1 and FIG. 2. The disclosure provides a calibration system 1000. The calibration system 1000 includes a time-of-flight module 300, an electronic device 800 and a calibration controller 806. The time-of-flight module 300 includes a light emitter 100, a light receiver 200 and a light detector 63. The light emitter 100 includes a light source 10. The light source 10 may emit optical signals. The light receiver 200 may receive the optical signals emitted by the light emitter 100. The light detector 63 is disposed on a circuit board 50 (illustrated in FIG. 18). The time-of-flight module 300 is disposed on the electronic device 800. The electronic device 800 may be a mobile phone, a tablet computer, a notebook computer, or a wearable device (such as a smart watch, a smart bracelet, smart glasses, a smart helmet, etc.), which is not limited here. The electronic device 800 includes an optical element. The optical element reflects the optical signals emitted by the light emitter 100. The light detector 63 may receive the optical signals reflected by the optical element.

Please refer to FIG. 1 to FIG. 3. The disclosure also provides a method for calibrating a time-of-flight module 300. The method includes the following.

At block 02, the light source 10 is controlled to emit optical signals at a predetermined working current.

At block 03, the light detector 63 is controlled to receive the optical signals reflected by the optical element to form calibration electrical signals.

Please refer to FIG. 1 to FIG. 3 together. The disclosure also provides a calibration controller 806. The calibration controller may be configured in the above calibration system 1000. In some implementations, the calibration controller 806 may be integrated in an electronic device 800 (illustrated in FIG. 1) or disposed outside the electronic device 800 (not illustrated). In addition, in some implementations, while the calibration controller 806 may be integrated within the electronic device 800, the calibration controller 806 may be further integrated in a processor 805 of the electronic device 800. The method for calibrating the time-of-flight module 300 according to implementations of the disclosure may be implemented by the calibration controller 806. The action at blocks 02 and 03 may be realized by the calibration controller 806. That is, the calibration controller 806 may be configured to control the light source 10 to emit the optical signals at the predetermined working current, and to control the light detector 63 to receive the optical signals reflected by the optical element to form the calibration electrical signals.

In detail, the time-of-flight module 300 may obtain depth information of an object in a target space in an indirectly obtaining way. In the indirectly obtaining way, the light emitter 100 emits the optical signals to the target space, and the light receiver 200 receives the optical signals reflected by the object in the target space and divides the optical signals into two parts. The processor 805 in the electronic device 800 may calculate a time-of-flight of the optical signals in the target space based on the two parts of the optical signals received by the light receiver 200, and further calculate the depth information of the object in the target space based on the time-of-flight and a light speed. In this way, the obtained depth information may have high accuracy when actually light-emitting power of the light emitter 100 is large enough. It may be understood that, when the actual light-emitting power of the light emitter 100 is small, the optical signals emitted into the target space may be excessively lost due to a reason such as a long time of flight, or partially absorbed by the target object, .which may cause a problem that the optical signals may not be reflected to be received by the light receiver 200, thereby causing that the light receiver 200 may not receive the reflected optical signal to calculate the time of flight of the target object, and may not further obtain the depth information of the target object, or cause a problem that only a small part of the optical signals are reflected and received by the light receiver 200, but the optical signals received by the light receiver 200 are too small, and the accuracy of the depth information of the target object calculated based on such part of the optical signals is low.

In order to improve the accuracy of obtaining the depth information, the light detector 63 may be disposed in the light emitter 100 to detect the actually light-emitting power of the light source 10 in the light emitter 100. When the actually light-emitting power is less than a target light-emitting power, a working current of the light source 10 is increased to improve the accuracy of obtaining the depth information. When the actually light-emitting power is greater than the target light-emitting power, the working current of the light source 10 may be reduced to reduce a power consumption of the time-of-flight module 300. The target light-emitting power may be calibrated.

In detail, in the calibration method and calibration system 1000 according to implementations of the disclosure, the target light-emitting power is calibrated before the time-of-flight module 300 leaves a factory. The calibration controller 806 is configured to drive the light source 10 to emit the optical signals at the predetermined working current, and the light detector 63 is configured to receive the optical signals reflected by the optical element and to convert the optical signals into electrical signals. The electrical signals may be detection current, and the electrical signals may be calibration electrical signals of the light emitter 100. The calibration electrical signals are used to indirectly characterize the target light-emitting power of the light source 10. When the time-of-flight module 300 is used subsequently, the processor 805 of the electronic device 800 drives the light source 10 to emit the optical signals with the same predetermined working current, and the light detector 63 receives the optical signals reflected by the optical element and converts the optical signals into real-time electrical signals at the current time point. The real-time electrical signal is used to indirectly characterize the actually light-emitting power of the light source 10. The processor 805 compares the real-time electrical signal each with the calibration electrical signal. When the real-time electrical signal is lower than the calibration electrical signal, the processor 805 adjusts the working current of the light source 10 to increase the actually light-emitting power of the light source 10, such that the light-emitting power of the light source 10 may meet a requirement for an accuracy of the depth information. When the real-time electrical signal is greater than the calibration electrical signal, the processor 805 may reduce the working current of the light source 10 to reduce the actually light-emitting power of the light source 10, thereby meeting the requirement for the accuracy of the depth information and reducing the power consumption of the time-of-flight module 300. When the real-time electrical signal is equal to the calibration electrical signal, the processor 805 may not perform any action.

With the calibration method, the calibration controller 806 and the calibration system 1000 according to implementations of the disclosure, the calibration electrical signal that may characterize the target light-emitting power of the light source 10 is calibrated in advance by the light detector 63. In this way, when the time-of-flight module 300 is used subsequently, the working current of the light source 10 may be conveniently adjusted based on the calibration electrical signals calibrated in advance, such that the light source 10 has an enough light-emitting power and the requirement for the accuracy of the depth information is met.

Please refer to FIG. 2 and FIG. 4 together. In some implementations, the optical element includes a diffuser 20 of the light emitter 100. The controlling the light detector 63 to receive the optical signals reflected by the optical element to form the calibration electrical signals at block 03 includes the following.

At block 031, the light detector 63 is controlled to receive the optical signals reflected by the diffuser 20 to form the calibration electrical signals.

Please refer to FIG. 1, FIG. 2 and FIG. 4 together. In some implementations, the action at block 031 may be implemented by the calibration controller 806. That is, the calibration controller 806 may also be configured to control the light detector 63 to receive the optical signals reflected by the diffuser 20 to form the calibration electrical signals.

It may be understood that, the light emitter 100 generally includes the light source 10 and the diffuser 20. The light source 10 is configured to emit the optical signals, such as infrared laser signals. The diffuser 20 is configured to diffuse the optical signals emitted by the light source 10, to enabled light emitted into the target space to be uniform surface light. However, a light transmittance of the diffuser 20 may not generally reach 100%. Most of the optical signals emitted by the light source 10 may be diffused out through the diffuser 20, and a small part of the optical signals may be reflected by the diffuser 20. The light detector 63 is disposed in the light emitter 100, and a light receiving surface of the light detector 63 is toward to the diffuser 20. In this way, the light detector 63 may receive the optical signals reflected by the diffuser 20 and convert the optical signals into the electrical signals for outputting during calibration. The output electrical signals may be stored in the electronic device 800 as the calibration electrical signals. When the time-of-flight module 300 is used subsequently, the light detector 63 also receives the optical signals reflected by the diffuser 20 and converts the optical signals into the real-time electrical signals for outputting, and the processor 805 adjusts the working current of the light source 10 based on a comparing result between the real-time electrical signals and the calibration electrical signals.

Please refer to FIG. 2 to FIG. 5. In some implementations, the optical element includes the diffuser 20 of the light emitter 100 and a protective cover 40. The controlling the light detector 63 to receive the optical signals reflected by the optical element to form the calibration electrical signals at block 03 includes the following.

At block 032, the light detector 63 is controlled to receive the optical signals reflected by the diffuser 20 and the protective cover 40 to form the calibration electrical signals.

Please refer to FIG. 1, FIG. 2 and FIG. 5 together. In some implementations, the action at block 032 may be implemented by the calibration controller 806. That is, the calibration controller 806 may also be configured to control the light detector 63 to receive the optical signals reflected by the diffuser 20 and the protective cover 40 to form the calibration electrical signals.

In detail, the light emitter 100 generally includes the light source 10 and the diffuser 20. The light source 10 is configured to emit the optical signals, such as the infrared laser signals. The diffuser 20 is configured to diffuse the optical signals emitted by the light source 10, to enable the light emitted into the target space to be the uniform surface light. Further, the light emitter 100 may further include the protective cover 40. The diffuser 20 and the protective cover 40 are sequentially disposed along a light emitting direction of the light source 10. On the one hand, the protective cover 40 may prevent the diffuser 20 from falling off the light emitter 100. On the other hand, the protective cover 40 may provide protection against dust and water and the like for the diffuser 20. It may be understood that, the light transmittance of the diffuser 20 may not generally reach 100%. Most of the optical signals emitted by the light source 10 may be diffused out through the diffuser 20, and a small part of the optical signals may be reflected by the diffuser 20. Similarly, a light transmittance of the protective cover 40 may not generally reach 100%. Most of the optical signals emitted through the diffuser 20 may be emitted into the target space through the protective cover 40, and a small part of the optical signals may be reflected back by the protective cover 40. The light detector 63 is disposed in the light emitter 100, and the light receiving surface of the light detector 63 is toward to the diffuser 20. In this way, the light detector 63 may receive the optical signals reflected by the diffuser 20 and the protective cover 40, and convert the optical signals into electrical signals for outputting during calibration. The output electrical signals may be stored in the electronic device 800 as the calibration electrical signals. In the subsequent use of the time-of-flight module 300, the light detector 63 also receives the optical signals reflected by the diffuser 20 and the protective cover 40, and converts the optical signals into the real-time electrical signals for outputting. The processor 805 adjusts the working current of the light source 10 based on a comparing result between the real-time electrical signals and the calibration electrical signals.

It may be understood that, when the protective cover 40 is not added into the time-of-flight module 300 used in the calibration procedure, the optical signals received by the light detector 63 only includes the optical signals reflected by the diffuser 20, and the calibration electrical signal obtained at this time is assumed as I₀. When the protective cover 40 is disposed on the time-of-flight module 300 in an actual using procedure, the optical signals received by the light detector 63 include both the part of the optical signals reflected by the diffuser 20 and the part of the optical signals reflected by the protective cover 40, and the real-time electrical signal obtained at this time is assumed as I₁. In the actual using procedure of the time-of-flight module 300, the optical signals received by the light detector 63 additionally include the optical signals reflected by the protective cover 40, a condition I₁>I₀ may occur. The processor 805 considers that the actually light-emitting power of the light source 10 at this time is greater than the target light-emitting power after obtaining a result I₁>I₀, and reduces the working current of the light source 10. However, in fact, when the light detector 63 only receives the optical signals reflected by the diffuser 20, but does not receive the optical signals reflected by the protective cover 40, the real-time electrical signal output by the light detector 63 is I₂ (assuming I₂ < I₀), in other words, the actually light-emitting power of the light source 10 is lower than the target light-emitting power, and the processor 805 is supposed to increase the working current of the light source 10. However, since composition of the optical signals received by the light detector 63 in the actual using procedure is different from that of the optical signals received in the calibration procedure, the actual light-emitting power detected in the actual using procedure is inaccurate, further caused that the processor 805 incorrectly adjusts the working current of the light source 10.

Therefore, when the time-of-flight module 300 is disposed with the protective cover 40 before leaving the factory, the time-of-flight module 300 is also disposed with a protective cover 40 consistent with the protective cover 40 when leaving the factory in the calibration procedure. In this way, a calibration scene of the time-of-flight module 300 is approximately similar to a using scene of the time-of-flight module 300. The calibration electrical signal includes the optical signals reflected by the diffuser 20 and the optical signals reflected by the protective cover 40, and the real-time electrical signal also includes the optical signals reflected by the diffuser 20 and the optical signals reflected by the protective cover 40. The processor 805 may take the calibration electrical signal as a reference signal to accurately adjust a driving current of the light source 10.

Please refer to FIG. 1, FIG. 2 and FIG. 6 together. In some implementations, the optical element includes the diffuser 20 of the light emitter 100 and a cover plate 807 of the electronic device 800. The cover plate 807 may be disposed on a surface where a display screen 802 of the electronic device 800 is located, in which case the time-of-flight module 300 is a front module. The cover plate 807 may also be disposed on a surface of the electronic device 800 opposite to the surface where the display screen 802 is located, in which case the time-of-flight module 300 is a rear module. The controlling the light detector 63 to receive the optical signals reflected by the optical element to form the calibration electrical signals at block 03 includes the following.

At block 033, the light detector 63 is controlled to receive the optical signals reflected by the diffuser 20 and the cover plate 807 to form the calibration electrical signals.

Please refer to FIG. 1, FIG. 2 and FIG. 6 together. In some implementations, the action at block 032 may be implemented by the calibration controller 806. That is, the calibration controller 806 may also be configured to control the light detector 63 to receive the optical signals reflected by the diffuser 20 and the cover plate 807 to form the calibration electrical signals.

In detail, the light emitter 100 generally includes the light source 10 and the diffuser 20. The light source 10 is configured to emit the optical signals, such as the infrared laser signals. The diffuser 20 is configured to diffuse the optical signals emitted by the light source 10, to enable the light emitted into the target space to be the uniform surface light. Further, the light emitter 100 is generally housed within a housing 801 of the electronic device 800 when the light emitter 100 is disposed in the electronic device 800. An emitting window of the light emitter 100 corresponding to the housing 801 is generally disposed with the cover plate 807, to enable the optical signal emitted by the light emitter 100 to be emitted, and to provide protection against dust and water and the like for the light emitter 100. It may be understood that, the light transmittance of the diffuser 20 may not generally reach 100%. Most of the optical signals emitted by the light source 10 may diffuse out through the diffuser 20, and a small part of the optical signals may be reflected by the diffuser 20. Similarly, a light transmittance of the cover plate 807 may not generally reach 100%. Most of the optical signals emitted through the diffuser 20 may be emitted into the target space through the cover plate 807, and a small part of the optical signals may be reflected back by the cover plate 807. The light detector 63 is disposed in the light emitter 100, and the light receiving surface of the light detector 63 is toward to the diffuser 20. In this way, in the calibration procedure, the light detector 63 may receive the optical signals reflected by the diffuser 20 and the cover plate 807, and convert the optical signals into electrical signals for outputting, and the output electrical signals may be stored in the electronic device 800 as the calibration electrical signals. When the time-of-flight module 300 is used subsequently, the light detector 63 also receives the optical signals reflected by the diffuser 20 and the cover plate 807, and converts the optical signals into real-time electrical signals for outputting. The processor 805 then adjusts the working current of the light source 10 based on a comparing result between the real-time electrical signals and the calibration electrical signals.

It may be understood that, when the cover plate 807 is not added into the time-of-flight module 300 used in the calibration procedure, the optical signals received by the light detector 63 only include the optical signals reflected by the diffuser 20 and the calibration electrical signal obtained at this time is assumed as I₀. However, since the cover plate 807 is disposed on the time-of-flight module 300 in the actual using procedure, the optical signals received by the light detector 63 include both the optical signals reflected by the diffuser 20 and the optical signals reflected by the cover plate 807, and the real-time electrical signal obtained at this time is assumed as I₃. In the actual using procedure of the time-of-flight module 300, the optical signals received by the light detector 63 additionally include the optical signals reflected by the cover plate 807. In this case, a condition I₃>I₀ may occur. The processor 805 considers that the actual light-emitting power of the light source 10 at this time is greater than the target light-emitting power after obtaining a result I₃>I₀, and reduces the working current of the light source 10. However, in fact, when the light detector 63 only receives the optical signals reflected by the diffuser 20, but does not receive the optical signals reflected by the cover plate 807, the real-time electrical signal output by the light detector 63 is I₄ (assuming I₄ < I₀), in other words, the actually light-emitting power of the light source 10 is lower than the target light-emitting power, and the processor 805 is supposed to increase the working current of the light source 10. However, since composition of the optical signals received by the light detector 63 in the actual using procedure is different from that of the optical signals received in the calibration procedure, the actual light-emitting power detected in the actual using procedure is inaccurate, further caused that the processor 805 incorrectly adjusts the working current of the light source 10.

Therefore, since the time-of-flight module 300 is disposed on the electronic device 800, and the electronic device 800 is disposed with the cover plate 807, the time-of-flight module 300 is also disposed with a cover plate 807 consistent with the cover plate 807 disposed on the electronic device 800 in the calibration procedure. In this way, the calibration scene of the time-of-flight module 300 is approximately similar to the using scene of the time-of-flight module 300. The calibration electrical signal includes the optical signals reflected by the diffuser 20 and the optical signals reflected by the cover plate 807, and the real-time electrical signal also includes the optical signals reflected by the diffuser 20 and the optical signals reflected by the cover plate 807. The processor 805 may take the calibration electrical signal as a reference signal to accurately adjust the driving current of the light source 10.

Please refer to FIG. 1, FIG. 2 and FIG. 7 together. In some implementations, the optical element includes the diffuser 20 of the light emitter 100, the protective cover 40 of the light emitter 100, and the cover plate 807 of the electronic device 800. The cover plate 807 may be disposed on the surface where the display screen 802 of the electronic device 800 is located, in which case the time-of-flight module 300 is the front module. The cover plate 807 may also be a cover plate 807 disposed on the surface of the electronic device 800 opposite to the surface where the display screen 802 is located, in which case the time-of-flight module 300 is the rear module. The controlling the light detector 63 to receive the optical signals reflected by the optical element to form the calibration electrical signals at block 03 includes the following.

At block 034, the light detector 63 is controlled to receive optical signals reflected by the diffuser 20, the protective cover 40, and the cover plate 807 to form calibration electrical signals.

Please refer to FIG. 1, FIG. 2 and FIG. 7 together. In some implementations, the action at block 034 may be implemented by the calibration controller 806. That is, the calibration controller 806 may also be configured to control the light detector 63 to receive the optical signals reflected by the diffuser 20, the protective cover 40, and the cover plate 807 to form the calibration electrical signals.

In detail, the light emitter 100 generally includes the light source 10 and the diffuser 20. The light source 10 is configured to emit the optical signals, such as the infrared laser signals. The diffuser 20 is configured to diffuse the optical signals emitted by the light source 10, to enable the light emitted into the target space to be the uniform surface light. Further, the light emitter 100 may also include the protective cover 40. The diffuser 20 and the protective cover 40 are sequentially disposed along the light emitting direction of the light source 10. On the one hand, the protective cover 40 may prevent the diffuser 20 from falling off from the light emitter 100. On the other hand, the protective cover 40 may provide protection against dust and water and the like for the diffuser 20. Further, the light emitter 100 is generally housed in the housing 801 of the electronic device 800 when installed in the electronic device 800. The cover plate 807 is generally disposed on the emitting window of the light emitter 100 corresponding to the housing 801, to enable the optical signals emitted by the light emitter 100 to be emitted, and to provide protection against dust and water and the like for the light emitter 100. It may be understood that, the light transmittance of the diffuser 20 may not generally reach 100%. Most of the optical signals emitted by the light source 10 may be diffused out through the diffuser 20, and a small part of the optical signals may be reflected by the diffuser 20. Similarly, the light transmittance of the protective cover 40 may not generally reach 100%. Most of the optical signals emitted through the diffuser 20 may be emitted into the target space through the protective cover 40, and a small part of the optical signals may be reflected back by the protective cover 40. Similarly, the light transmittance of the cover plate 807 may not generally reach 100%. Most of the optical signals emitted through the diffuser 20 may be emitted into the target space through the cover plate 807, and a small part of the optical signals may be reflected back by the cover plate 807. The light detector 63 is disposed in the light emitter 100, and the light receiving surface of the light detector 63 is toward to the diffuser 20. In this way, in the calibration procedure, the light detector 63 may receive the optical signals reflected by the diffuser 20, the protective cover 40 and the cover plate 807, and convert the optical signals into the electrical signals for outputting. The output electrical signals may be stored in the electronic device 800 as the calibration electrical signals. In the subsequent use of the time-of-flight module 300, the light detector 63 also receives the optical signals reflected by the diffuser 20, the optical signals reflected by the protective cover 40 and the optical signals reflected by the cover plate 807, and converts all the optical signals into real-time electrical signals for outputting. The processor 805 then adjusts the working current of the light source 10 based on a comparing result between the real-time electrical signals each and the calibration electrical signal.

It may be understood that, when the protective cover 40 and the cover plate 807 are not added into the time-of-flight module 300 used in the calibration procedure, the optical signals received by the light detector 63 only include the optical signals reflected by the diffuser 20, and the calibration electrical signal obtained at this time is assumed as I₀. However, in the actual using procedure of the time-of-flight module 300, since the time-of-flight module 300 is disposed with the protective cover 40, and the electronic device 800 is disposed with the cover plate 807, the optical signals received by the light detector 63 includes the optical signals reflected by the diffuser 20, the optical signals reflected by the protective cover 40 and the optical signals reflected by the cover plate 807, and the real-time electrical signal obtained at this time is assumed as I₅. In the actual using procedure of the time-of-flight module 300, the optical signals received by the light detector 63 additionally include the optical signals reflected by the protective cover 40 and the optical signals reflected by the cover plate 807. In this case, a condition I₅>I₀ may occur. The processor 805 considers that the actually light-emitting power of the light source 10 at this time is greater than the target light-emitting power after obtaining a result I₅>I₀, and reduce the working current of the light source 10. However, in fact, when the light detector 63 only receives the optical signals reflected by the diffuser 20, but does not receive the optical signals reflected by the protective cover 40 and the cover plate 807, the real-time electrical signal output by the light detector 63 is I₆ (assuming I₆ < I₀), in other words, the actually light-emitting power of the light source 10 is lower than the target light-emitting power, and the processor 805 is supposed to increase the working current of the light source 10. However, since the composition of the optical signals received by the light detector 63 in the actual using procedure is different from the composition of the optical signals received in the calibration procedure, the actual light-emitting power detected in the actual using procedure is inaccurate, further caused that the processor 805 incorrectly adjusts the working current of the light source 10.

Therefore, the time-of-flight module 300 is disposed with the protective cover 40 when the time-of-flight module 300 is actually used, and the electronic device 800 is disposed with the cover plate 807 when the time-of-flight module 300 is disposed on the electronic device 800, so the time-of-flight module 300 is also disposed with a protective cover 40 consistent with the protective cover 40 when leaving the factory and a cover plate 807 consistent with the cover plate 807 disposed on the electronic device 800 in the calibration procedure. In this way, the calibration scene of the time-of-flight module 300 is approximately similar to the using scene of the time-of-flight module 300. The calibration electrical signal includes the optical signals reflected by the diffuser 20, the optical signals reflected by the protective cover 40 and the optical signals reflected by the cover plate 807. The real-time electrical signal also includes the optical signals reflected by the diffuser 20, the optical signals reflected by the protective cover 40 and the optical signals reflected by the cover plate 807. The processor 805 may take the calibration electrical signal as a reference signal to accurately adjust the driving current of the light source 10.

Please refer to FIG. 8. In some implementations, before the action at block 02, the method also includes the following.

At block 01, the predetermined working current is calculated based on a preset distance.

Please refer to FIG. 1 and FIG. 8 together. In some implementations, the action at block 02 may also be implemented by the calibration controller 806. In other words, the calibration controller 806 may be configured to calculate the predetermined working current based on the preset distance.

It may be understood that, when a distance between a target subject and the time-of-flight module 300 in a scene is closer, a smaller working current is used to drive the light source 10 to emit light. And more particularly, when the target subject is a user, since the optical signals emitted by the light source 10 is generally the infrared laser signals, energy of the optical signals emitted by the light source 10 is relatively higher when the driving current is larger at this time, which is likely to cause a damage to eyes of the user within a close range. When the distance between the target subject in the scene and the time-of-flight module 300 is longer, a larger working current is used to drive the light source 10 to emit light, thereby ensuring that the emitted optical signals may not be completely lost, and most of the optical signals may be reflected back and received by the light receiver 200, thereby further ensuring that the depth information has a higher obtaining accuracy. Therefore, the time-of-flight module 300 may be driven by different predetermined working currents in the actual using procedure. The real-time electrical signals received by the light detector 63 are different when the driving is performed by different predetermined working currents.

Then, in the calibration procedure, the calibration controller 806 determines the calibration electrical signals respectively corresponding to the multiple predetermined working currents based on different predetermined working currents. In detail, first, working currents corresponding to the multiple preset distances are respectively calculated according to selected multiple preset distances. A calculation procedure may be: (1) obtaining a mapping relationship between the preset distances and the predetermined working currents based on multiple experimental data; and (2) obtaining predetermined working currents each corresponding to each preset distance based on a determined mathematical model, in which the calculation method is not limited here. Calibration currents each corresponding to each predetermined working current are calibrated in turn after the predetermined working currents are determined. For example, a calibrated corresponding relationship between the predetermined working currents and the calibration currents includes: Iₚᵣₑₛₑₜ₁→I_{calibration 1}, Iₚᵣₑₛₑₜ₂→ Icalibration2, .... Then, in the subsequent actual using procedure of the flight time module 300, the processor 805 may adjust the working current of the light source 10 by comparing the real-time electrical signal with a calibration current I_{calibration 1} when the flight time module 300 drives the light source 10 to emit the optical signals with a working current Iₚᵣₑₛₑₜ₁, and the processor 805 adjusts the working current of the light source 10 by comparing the real-time electrical signal with a calibration current I_{calibration 2} when the time-of-flight module 300 drives the light source 10 to emit the optical signals with a working current Iₚᵣₑₛₑₜ₂, and so on.

In this way, each calibration current corresponding to the predetermined working current is taken as a reference for adjusting the driving current of the light source 10, thereby improving the accuracy of adjusting the driving current of the light source 10, and further enabling the actually light-emitting power of the light source 10 closer to the target light-emitting power.

Please refer to FIG. 2, FIG. 9 and FIG. 10 together. In some implementations, the light emitter 100 includes multiple light emitting elements 11. The multiple light emitting elements 11 are divided into multiple light-emitting element groups. The light detector 63 includes multiple light detecting elements each corresponding to each light-emitting element group. The controlling the light source 10 to emit the optical signals at the predetermined working current at block 02 includes the following.

At block 021, light emitting elements in the multiple light-emitting element groups are controlled to simultaneously emit the optical signals.

The controlling the light detector 63 to receive the optical signals reflected by the optical element to form the calibration electrical signals at block 03 includes the following.

At block 035, the multiple light detecting elements are controlled to correspondingly receive the optical signals emitted by the multiple light-emitting element groups, and to convert the optical signals into multiple electrical signals as the calibration electrical signals corresponding to the multiple light-emitting element groups.

Please refer to FIG. 1, FIG. 2, FIG. 9 and FIG. 10 together. In some implementations, the actions at blocks 021 and 035 both may be implemented by the calibration controller 806. In other words, the calibration controller 806 may be configured to control the light emitting elements 11 in the multiple light-emitting element groups to simultaneously emit the optical signals, and to control the multiple light detecting elements to receive the optical signals emitted by the multiple light-emitting element groups, and to convert the optical signals into the multiple electrical signals as the calibration electrical signals corresponding to the multiple light-emitting element groups.

In detail, referring to FIG. 10, assumed that the light-emitting element groups in the light emitter 100 includes groups I, II, III, and IV, each light-emitting element group includes multiple light emitting elements 11, and each light-emitting element group may be controlled independently. The light detector 63 includes four light detecting elements, i.e., a light detecting element A, a light detecting element B, a light detecting element C, and a light detecting element D. The light detecting element A is disposed at a center position of a light emitting area where the group I is located. The group I corresponds to the light detecting element A. The light detecting element A may receive optical signals emitted by light emitting elements 11 of the group I. The light detecting element B is disposed at a center position of a light emitting area where the group II is located. The group II corresponds to the light detecting element B. The light detecting element B may receive optical signals emitted by light emitting elements 11 of the group II. The light detecting element C is disposed at a center position of a light emitting area where the group III is located. The group III corresponds to the light detecting element C. The light detecting element C may receive optical signals emitted by light emitting elements 11 of the group III. The light detecting element D is disposed at a center position of a light emitting area where the group IV is located. The group IV corresponds to the light detecting element D. The light detecting element D may receive optical signals emitted by light emitting elements 11 of the group IV.

In the calibration procedure, the calibration controller 806 controls all the light emitting elements 11 in the groups I, II, III and IV to simultaneously emit light, and controls the light detecting elements A, B, C and D to be turned on simultaneously. The light detecting element A receives the optical signals emitted by the light emitting elements 11 of the group I. The light detecting element B receives the optical signals emitted by the light emitting elements 11 of the group II. The light detecting element C receives the optical signals emitted by the light emitting elements 11 of the group III. The light detecting element D receives the optical signals emitted by the light emitting elements 11 of the group IV. The light detecting element A converts the optical signals into an electrical signal and converts the electrical signal as a calibration electrical signal I_{calibration A} of the group I after receiving the optical signals emitted by the light emitting elements 11 of the group I. The light detecting element B converts the optical signals into an electrical signal and converts the electrical signal as a calibration electrical signal I_{calibration B} of the group II after receiving the optical signals emitted by the light emitting elements 11 of the group II. The light detecting element C converts the optical signals into an electrical signal and converts the electrical signal as a calibration electrical signal I_{calibration} c of the group III after receiving the optical signals emitted by the light emitting elements 11 of the group III. The light detecting element D converts the optical signals into an electrical signal and converts the electrical signal as a calibration electrical signal I_{calibration D} of the group IV after receiving the optical signals emitted by the light emitting elements 11 of the group IV. Therefore, each light emitter 100 has four calibration electrical signals, i.e., the I_{calibration A}, the I_{calibration B}, the I_{calibration} c, and the I_{calibration D}.

In the subsequent adjustment for the working current of the light source 10 of the time-of-flight module 300, the processor 805 may control all the light emitting elements 11 in the groups I, II, III and IV to simultaneously emit the light, and control the light detecting elements A, B, C and D to be turned on simultaneously. The light detecting element A converts the optical signals into a real-time electrical signal I_{real A} of the group I after receiving the optical signals emitted by the light emitting elements 11 of the group I. The light detecting element B converts the optical signals into an electrical signal and converts the electrical signal as a calibration electrical signal I_{real B} of the group II after receiving the optical signals emitted by the light emitting elements 11 of the group II. The light detecting element C converts the optical signals into an electrical signal and converts the electrical signal as a calibration electrical signal I_{real C} of the group III after receiving the optical signals emitted by the light emitting elements 11 of the group III. The light detecting element D converts the optical signals into an electrical signal and converts the electrical signal as a calibration electrical signal I_{real D} of the group IV after receiving the optical signals emitted by the light emitting elements 11 of the group IV. Then, the processor 805 adjusts the working current of the light emitting element 11 of the group I based on a comparing result between the I_{real A} and the I_{calibration A}, adjusts the working current of the light emitting element 11 of the group II based on a comparing result between the I_{real B} and the I_{calibration B}, adjusts the working current of the light emitting element 11 of the group III based on a comparing result between the I_{real C} and the I_{calibration C}, and adjusts the working current of the light emitting element 11 of the group IV based on a comparing result between the I_{real D} and the I_{calibration D}.

It may be noted that, the above is merely taking the number of light-emitting element groups is four and the number of light detecting elements is four as an example. In other examples, the number of light-emitting element groups and the number of light detecting elements may also be other values, which are not limited here.

It may be understood that, due to different manufacturing processes of each light emitting element11, various light emitting elements 11 may have different electro-optical conversion efficiencies, and different electro-optical conversion efficiencies may also have different reduction amounts after each light emitting element 11 is used for a period. In a case that the multiple light emitting elements 11 in the light source 10 are not grouped, the optical signals emitted by all the light emitting elements 11 of the entire light emitter 100 are directly detected to determine one adjusted working current, and all the light emitting elements 11 are driven based on the adjusted working current, it may be caused that a part of the optical signals emitted by the light emitting element 11 are stronger, a part of the optical signals emitted by the light emitting element 11 are weaker, and the optical signals emitted by the entire light source 10 have a poor uniformity. In this case, the light emitted into the target space is not the uniform surface light, but the light in some areas is stronger, and the light in some areas is weak, such that depth information of different areas in an entire depth image has different obtaining accuracies, and a quality of the obtained depth image is affected.

With the method according to embodiments of the disclosure, the multiple light emitting elements 11 are divided into the multiple light emitting element groups, and the calibration signal corresponding to each light-emitting element group is calibrated. In this way, the driving current of the light emitting elements 11 in the light-emitting element group corresponding to the calibration signal may be adjusted based on the calibration signal in the subsequent using procedure. The uniformity of the optical signals emitted by the light emitter 100 may be improved. The quality of the obtained depth image may be further improved.

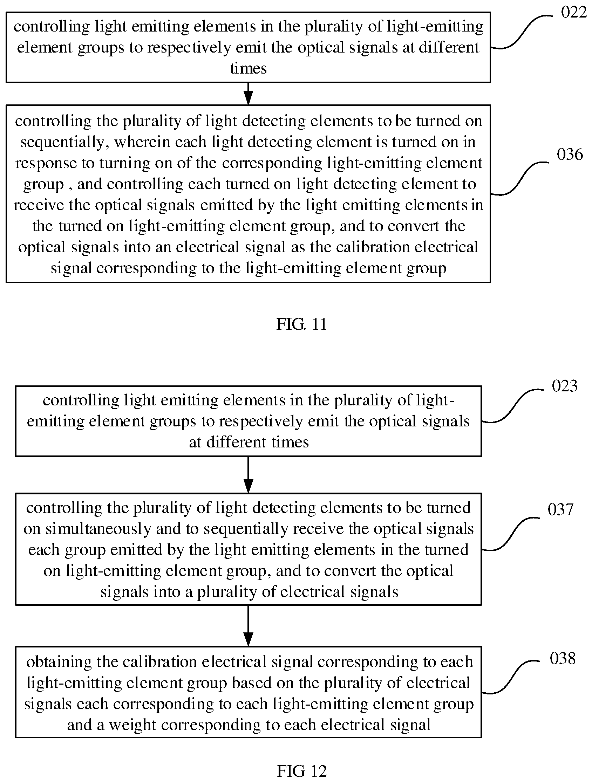

Please refer to FIG. 2, FIG. 10 and FIG. 11 together. In some implementations, the light emitter 100 includes multiple light emitting elements 11. The multiple light emitting elements 11 are divided into multiple light-emitting element groups. The light detector 63 includes multiple light detecting elements each corresponding to each light-emitting element group. The controlling the light source to emit the optical signals at the predetermined working current at block 02 includes the following.

At block 022, light emitting elements in the multiple light-emitting element groups are controlled to respectively emit the optical signals at different times.

The controlling the light detector 63 to receive the optical signals reflected by the optical element to form the calibration electrical signals at block 03 includes the following.

At block 036, the multiple light detecting elements are controlled to be turned on sequentially, and each light detecting element is turned on in response to turning on of the corresponding light-emitting element group, and each turned on light detecting element is controlled to receive the optical signals emitted by the light emitting elements in the turned on light-emitting element group, and to convert the optical signals into an electrical signal as the calibration electrical signal corresponding to the light-emitting element group.

Please refer to FIG. 1, FIG. 2, FIG. 10 and FIG. 11 together. In some implementations, the actions at blocks 022 and 036 both may be implemented by the calibration controller 806. In other words, the calibration controller 806 may also be configured to control the light emitting elements 11 in the multiple light-emitting element groups to respectively emit the optical signals at different times; and to control the multiple the light detecting elements to be turned on sequentially, and each light detecting element is turned on in response to turning on of the corresponding light-emitting element group, and control each turned on light detecting element to receive the optical signals emitted by the light emitting elements in the turned on light-emitting element group, and to convert the optical signals into the electrical signal as the calibration electrical signal corresponding to the light-emitting element group.

In detail, please refer to FIG. 10 again. assumed that the light-emitting element groups in the light emitter 100 includes groups I, II, III, and IV, each light-emitting element group includes multiple light emitting elements 11, and each light-emitting element group may be controlled independently. The light detector 63 includes four light detecting elements, i.e., a light detecting element A, a light detecting element B, a light detecting element C, and a light detecting element D. The light detecting element A is disposed at a center position of a light emitting area where the group I is located. The group I corresponds to the light detecting element A. The light detecting element A may receive optical signals emitted by light emitting elements 11 of the group I. The light detecting element B is disposed at a center position of a light emitting area where the group II is located. The group II corresponds to the light detecting element B. The light detecting element B may receive optical signals emitted by light emitting elements 11 of the group II. The light detecting element C is disposed at a center position of a light emitting area where the group III is located. The group III corresponds to the light detecting element C. The light detecting element C may receive optical signals emitted by light emitting elements 11 of the group III. The light detecting element D is disposed at a center position of a light emitting area where the group IV is located. The group IV corresponds to the light detecting element D. The light detecting element D may receive optical signals emitted by light emitting elements 11 of the group IV.

In the calibration procedure, the calibration controller 806 controls all the light emitting elements 11 in the groups I, all the light emitting elements 11 in the groups II, all the light emitting elements 11 in the groups III and all the light emitting elements 11 in the groups IV to respectively emit light at different times, and controls the light detecting elements A, B, C and D to be turned on simultaneously. In detail, for example, all the light emitting elements 11 in the group I are simultaneously turned on to emit the light, and the light detecting element A is controlled to be turned on at the same time. The light detecting element A detects the optical signals emitted by the light emitting elements 11 in the group I and converts the optical signals into an electrical signal, and the calibration controller 806 takes the electrical signal as a calibration electrical signal I_{calibration A} of the group I. Then, the calibration controller 806 turns off the light emitting elements 11 in the group I and the light detecting element A, turns on all the light emitting elements 11 in the group II to emit light at the same time, and controls the light detecting element B to be turned on. The light detecting element B detects the optical signals emitted by light emitting elements 11 in the group II and converts the optical signals into an electrical signal, and the calibration controller 806 takes the electrical signal as a calibration electrical signal I_{calibration B} of the group II. Then, the calibration controller 806 turns off the light emitting elements 11 in the group II and the light detecting element B, turns on all the light emitting elements 11 in the group III to emit light at the same time, and controls the light detecting element C to be turned on. The light detecting element C detects the optical signals emitted by the light emitting elements 11 in the group III and converts the optical signals into an electrical signal, and the calibration controller 806 takes the electrical signal as a calibration electrical signal I_{calibration C} of the group III. Then, the calibration controller 806 turns off the light emitting elements 11 in the group III and the light detecting elements C, turns on all the light emitting elements 11 in the group IV to emit light at the same time, and controls the light detecting element D to be turned on. The light detecting element D detects the optical signals emitted by the light emitting elements 11 in the group IV, and converts the optical signals into an electrical signal, and the calibration controller 806 takes the electrical signal as a calibration electrical signal I_{calibration D} of the group IV Finally, the calibration controller 806 controls the light emitting elements 11 in the group IV and the light detecting element D to be turned off.

In the subsequent adjustment for the working current of the light source 10 of the time-of-flight module 300, the processor 805 may respectively obtain real-time electrical signals I_{real A} corresponding to the group I, real-time electrical signals I_{real B} corresponding to the group II, real-time electrical signals I_{real C} corresponding to the group III and real-time electrical signals I_{real D} corresponding to the group IV based on a flow of turning on the light emitting elements 11 in the groups I, II, III and IV and a flow of turning on the light detecting elements A, B, C and D. Finally, the processor 805 determines the working current of the light emitting element 11 of the group I based on a comparing result between the I_{real A} and the I_{calibration A}, determines the working current of the light emitting element 11 of the group II based on a comparing result between the I_{real B} and the I_{calibration B}, determines the working current of the light emitting element 11 of the group III based on a comparing result between the I_{real C} and the I_{calibration C}, and determines the working current of the light emitting element 11 of the group IV based on a comparing result between the I_{real D} and the I_{calibration D}. The processor 805 controls the light emitting elements 11 in the groups I, II, III and IV to simultaneously emit the optical signals based on the four adjusted working currents after the processor 805 determines the four adjusted working currents of the light emitting elements 11 in the corresponding groups I, II, III and IV based on the four comparing results.

It may be noted that, the above merely takes that the number of light-emitting element groups is four and the number of light detecting elements is four as an example. In other examples, the number of light-emitting element groups and the number of light detecting elements may also be other values, which are not limited here.

It may be understood that, when the light emitting elements in the four groups are simultaneously controlled to emit the light, the light detecting element A may receive the optical signals emitted by the light emitting elements 11 of the groups II, III and IV in addition to the optical signals emitted by the light emitting elements 11 of group I, and such situation also exits in the light detecting elements B, C and D. Therefore, the finally obtained calibration electrical signals I_{real A}, I_{real B}, I_{real C} and I_{real D} have low accuracy. In this implementation, the light emitting elements 11 in the four light-emitting element groups are sequentially turned on to emit the optical signals, so each light detecting element receives only the optical signals emitted by the light emitting elements 11 in the light-emitting element group corresponding to the light detecting element each time, and the finally obtained calibration electrical signal is more accurate. In the subsequent using procedure, the more accurate calibration electrical signal is taken as an adjustment reference of the working current, and the accuracy of the adjusted working current may also be improved.

Please refer to FIG. 2, FIG. 10 and FIG. 12 together. In some implementations, the light emitter 100 includes multiple light emitting elements 11. The multiple light emitting elements 11 are divided into multiple light-emitting element groups. The light detector 63 includes multiple light detecting elements each corresponding to each light-emitting element group. The controlling the light source 10 to emit the optical signals at the predetermined working current at block 02 includes the following.

At block 023, light emitting elements 11 in the multiple light-emitting element groups are controlled to respectively emit the optical signals at different times.

The controlling the light detector 63 to receive the optical signals reflected by the optical element to form the calibration electrical signals at block 03 includes the following.

At block 037, the multiple light detecting elements are controlled to be turned on simultaneously and to sequentially receive the optical signals each group emitted by the light emitting elements 11 in the turned on light-emitting element group, and to convert the optical signals into multiple electrical signals.

At block 038: the calibration electrical signal corresponding to each light-emitting element group is obtained based on the multiple electrical signals each corresponding to each light-emitting element group and a weight corresponding to each electrical signal.

Please refer to FIG. 1, FIG. 2, FIG. 10 and FIG. 11 together. In some implementations, the actions at blocks 023, 037 and 038 both may be implemented by the calibration controller 806. In other words, the calibration controller 806 may also be configured to: control light emitting elements 11 in the multiple light-emitting element groups to respectively emit the optical signals at different times; control the multiple light detecting elements to be turned on simultaneously and to sequentially receive the optical signals each group emitted by the light emitting elements 11 in the turned on light-emitting element group, and to convert the optical signals into the multiple electrical signals; and obtain the calibration electrical signal corresponding to each light-emitting element group based on the multiple electrical signals each corresponding to each light-emitting element group and the weight corresponding to each electrical signal.

In detail, please refer to FIG. 10 again. assumed that the light-emitting element groups in the light emitter 100 includes groups I, II, III, and IV, each light-emitting element group includes multiple light emitting elements 11, and each light-emitting element group may be controlled independently. The light detector 63 includes four light detecting elements, i.e., a light detecting element A, a light detecting element B, a light detecting element C, and a light detecting element D. The light detecting element A is disposed at a center position of a light emitting area where the group I is located. The group I corresponds to the light detecting element A. The light detecting element A may receive optical signals emitted by light emitting elements 11 of the group I. The light detecting element B is disposed at a center position of a light emitting area where the group II is located. The group II corresponds to the light detecting element B. The light detecting element B may receive optical signals emitted by light emitting elements 11 of the group II. The light detecting element C is disposed at a center position of a light emitting area where the group III is located. The group III corresponds to the light detecting element C. The light detecting element C may receive optical signals emitted by light emitting elements 11 of the group III. The light detecting element D is disposed at a center position of a light emitting area where the group IV is located. The group IV corresponds to the light detecting element D. The light detecting element D may receive optical signals emitted by light emitting elements 11 of the group IV.

In the calibration procedure, the calibration controller 806 controls all the light emitting elements 11 in the groups I, all the light emitting elements 11 in the groups II, all the light emitting elements 11 in the groups III and all the light emitting elements 11 in the groups IV to respectively emit light at different times, and controls the light detecting elements A, B, C and D to be turned on simultaneously to receive the optical signals emitted by the light emitting elements 11 in the turned-on light-emitting element group, in a progress of controlling the light emitting elements 11 in each light-emitting element group to emit light. In detail, for example, first, all the light emitting elements 11 in the group I are turned on simultaneously to emit light, the light detecting elements A-D are turned on simultaneously, and the light detecting elements A-D each receives the optical signals emitted by the light emitting elements 11 in the group I. Then, the calibration controller 806 turns off the light emitting elements 11 in the group I and the light detecting elements A-D, turns on all the light emitting elements 11 in the group II to emit light, and simultaneously turns on the light detecting elements A-D again. The light detecting elements A-D each receives the optical signals emitted by the light emitting elements 11 in the group II. After, the calibration controller 806 turns off the light emitting elements 11 in the group II and the light detecting elements A-D, turns on all the light emitting elements 11 in the group III to emit light, and simultaneously turns on the light detecting elements A-D again. The light detecting elements A-D each receives the optical signals emitted by all the light emitting elements 11 in the group III. Next, the calibration controller 806 turns off the light emitting elements 11 in the group III and the light detecting elements A-D, turns on all the light emitting elements 11 in the group IV to emit light, and simultaneously turns on the light detecting elements A-D again. The light detecting elements A-D each receives the optical signals emitted by the light emitting elements 11 in the group IV. Finally, the calibration controller 806 turns off the light emitting elements 11 in the group IV and the light detecting elements A-D. The light detecting element may correspondingly output four electrical signals, when one light-emitting element group is turned on each time. Taking the group I as an example, when the light emitting elements 11 in the group I are turned on, the light detecting elements A-D may correspondingly output four electrical signals I_{IA}, I_{IB}, lie, and I_{ID}. The calibration controller 806 first determines weights W_{A}, W_{B}, W_{C}, W_{D} respectively corresponding to the electrical signals I_{IA}, I_{IB}, I_{IC}, and I_{ID} based on distances between the light detecting elements A-D and the group I. A calculation way for a final calibration electrical signal I_{calibration A} is: I_{calibration A} = I_{IA} × W_{A} + I_{IB} × W_{B}+ I_{IC} × W_{C}+ I_{ID} × W_{D}. Based on the same principle, the electrical signals I_{IB}, lie, and I_{ID} may be calculated.

In the subsequent adjustment for the working current of the light source 10 of the time-of-flight module 300, the processor 805 may respectively obtain real-time electrical signals I_{real A} corresponding to the group I, real-time electrical signals I_{real B} corresponding to the group II, real-time electrical signals I_{real C} corresponding to the group III and real-time electrical signals I_{real D} corresponding to the group IV based on a flow of turning on the light emitting elements 11 in the groups I, II, III and IV in the calibration procedure, a flow of turning on the light detecting elements A, B, C and D, and a method for calculating the calibration signal corresponding to each light-emitting element group. Finally, the processor 805 determines the working current of the light emitting element 11 of the group I based on a comparing result between the I_{real A} and the I_{calibration A}, determines the working current of the light emitting element 11 of the group II based on a comparing result between the I_{real B} and the I_{calibration B}, determines the working current of the light emitting element 11 of the group III based on a comparing result between the I_{real C} and the I_{calibration} c, and determines the working current of the light emitting element 11 of the group IV based on a comparing result between the I_{real D} and the I_{calibration D}. The processor 805 controls the light emitting elements 11 in the groups I, II, III and IV to simultaneously emit the optical signals based on the four adjusted working currents after the processor 805 determines the four adjusted working currents of the light emitting elements 11 in the corresponding groups I, II, III and IV based on the four comparing results.

It may be noted that, the above merely takes that the number of light-emitting element groups is four and the number of light detecting elements is four as an example. In other examples, the number of light-emitting element groups and the number of light detecting elements may also be other values, which are not limited here.

It may be understood that, comparing with only turning on one light detecting element to detect the optical signals emitted by the light emitting elements 11 in the turned on light-emitting element group, more optical signals emitted by the light emitting elements 11 may be received by the multiple light detecting elements turned on simultaneously when the light-emitting element groups are sequentially turned on to determine the calibration electrical signals in the calibration procedure, thereby further improving the accuracy of the calibration electrical signals. In the subsequent using, the accuracy of the adjusted working current may also be improved by taking a more accurate calibration electrical signal as an adjustment reference of the working current.

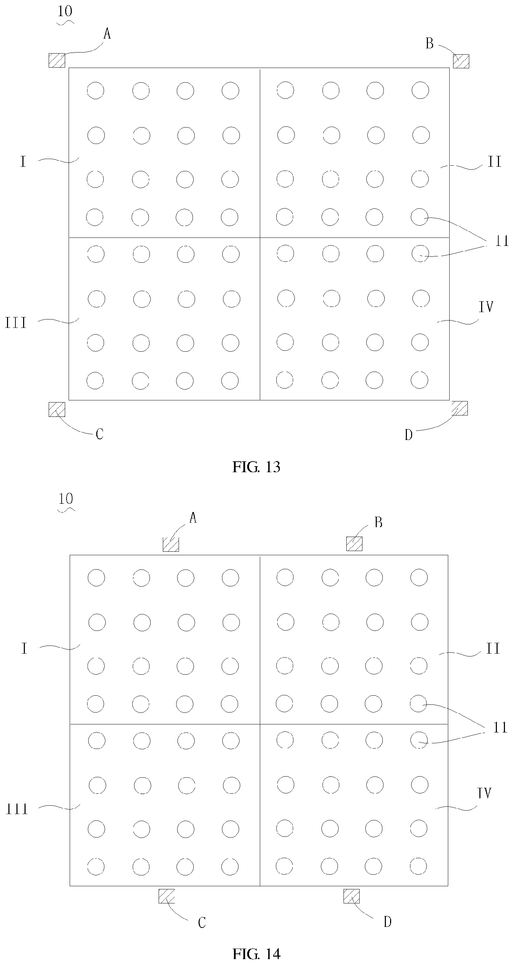

In the description of the above implementations, each of the light detecting elements is located at the central position of the light emitting area of each light emitting element group. In other implementations, each light detecting element is located at a position adjacent to the corresponding light-emitting element group. For example, as illustrated in FIG. 13, the light detecting element A is located at a position adjacent to a top corner of the group I. As illustrated in FIG. 14, the light detecting element is located at a position adjacent to a boundary of the group I.

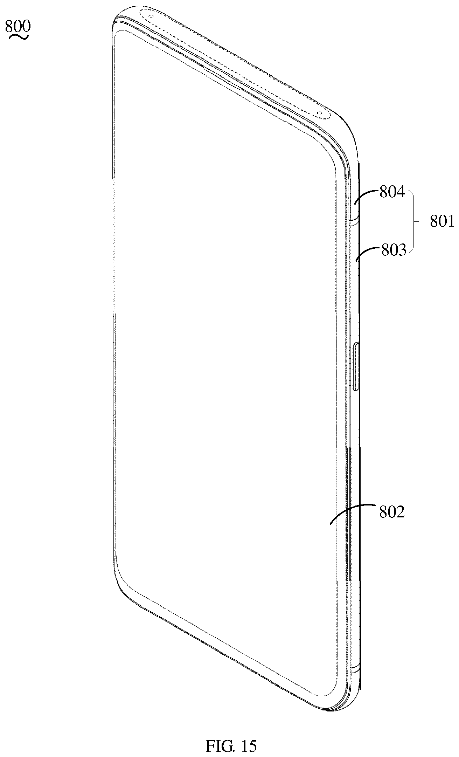

Please refer to FIG. land FIG. 15 together. In the electronic device 800 according to implementations of the disclosure, the housing 801 may be used as a mounting carrier for functional elements of the electronic device 800. The housing 801 may provide protections against dust, drop, water and the like for the functional elements. The functional elements may be the display screen 802, a visible light camera 400, a telephone receiver and the like. In implementations of the disclosure, the housing 801 includes a main body 803 and a movable bracket 804. The movable bracket 804 may move relatively to the main body 803 under driving of a driving device. For example, the movable bracket 804 may slide relatively to the main body 803 to enter the main body 803 (as illustrated in FIG. 15) or slide out from the main body 803 (as illustrated in FIG. 1). A part of the functional elements (such as the display screen 802) may be disposed on the main body 803, and another part of the functional components (such as the time-of-flight module 300, the visible light camera 400, and the telephone receiver) may be disposed on the movable bracket 804. A movement of the movable bracket 804 may drive the another part of the functional elements to be retracted into the main body 803 or be protruded from the main body 803. FIG. 1 and FIG.15 are only examples of a detailed form of the housing 801, which may not be understood as a limitation of the housing 801 of the disclosure.

The time-of-flight module 300 is disposed on the housing 801. In the specific implementation of the disclosure, the time-of-flight module 300 is disposed on the movable support 804. The user may trigger the movable bracket 804 to slide out of the main body 803 to drive the time-of-flight module 300 out of the main body 803 when the time-of-flight module 300 is desired to use. The user may trigger the movable bracket 804 to slide into the main body 803 to drive the time-of-flight module 300 to retract into the main body 803 when the time-of-flight module 300 is not desired to use.

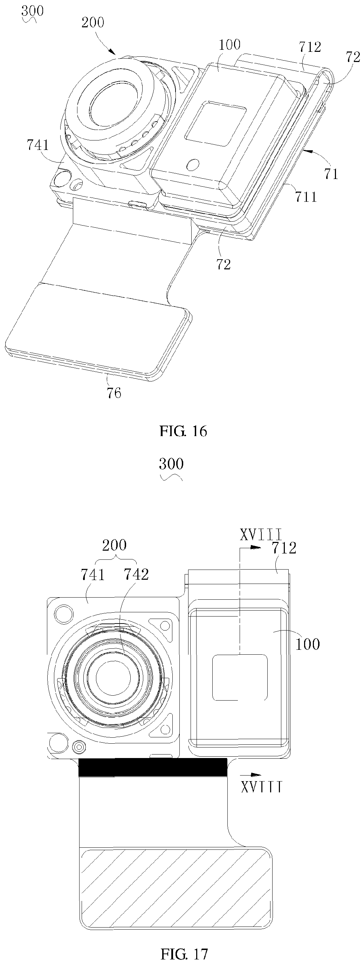

Please refer to FIG. 16 to FIG.18, the time-of-flight module 300 includes a first substrate assembly 71, a cushion 72, a light emitter 100 and a light receiver 200. The first substrate assembly 71 includes a first substrate 711 and a flexible circuit board 712 coupled to each other. The cushion 72 is disposed on the first substrate 711. The light emitter 100 is disposed on the cushion 72. The flexible circuit board 712 is bent. One end of the flexible circuit board 712 is coupled to the first substrate 711, and the other end is coupled to the light emitter 100. The light receiver 200 is disposed on the first substrate 711. The light receiver 200 includes an outer housing 741 and an optical device 742 disposed on the outer housing 741. The housing 741 and the cushion 72 are coupled as one body.

In detail, the first substrate assembly 71 includes the first substrate 711 and the flexible circuit board 712. The first substrate 711 may be a printed circuit board or a flexible circuit board. The first substrate 711 may be laid with a control line of the time-of-flight module 300. One end of the flexible circuit board 712 may be coupled to the first substrate 711, and the other end of the flexible circuit board 712 is coupled to a circuit board 50 (illustrated in FIG. 18). The flexible circuit board 712 may be bent at a certain angle, such that relative positions of the components connected to the two ends of the flexible circuit board 712 may have more choices.

The cushion 72 is disposed on the first substrate 711. In an example, the cushion 72 is contacted with the first substrate 711 and carried on the first substrate 711. In detail, the cushion 72 may be combined with the first substrate 711 by means of gluing or the like. A material of the cushion 72 may be metal, plastic, or the like. In implementations of the disclosure, a surface of the cushion 72 which is combined with the first substrate 711 may be a flat surface, and the surface of the cushion 72 opposite to the combined surface may also be a flat surface, such that the light emitter 100 has a better stability when disposed on the cushion 72.

The light receiver 200 is disposed on the first substrate 711. A contact surface of the light receiver 200 and the first substrate 711 is substantially flush with a contact surface of the cushion 72 and the first substrate 711 (that is, installation starting points of the light receiver 200 and the first substrate 711 are at on a same plane). In detail, the light receiver 200 includes the outer housing 741 and the optical device 742. The outer housing 741 is disposed on the first substrate 711. The optical device 742 is disposed on the outer housing 741. The outer housing 741 may be a lens holder and a lens barrel of the light receiver 200. The optical device 742 may be an element such as a lens disposed within the outer housing 741. Further, the light receiver 200 further includes a photosensitive chip (not illustrated). Optical signals reflected by a person or an object in the target space is irradiated into the photosensitive chip after passing through the optical device 742, and the photosensitive chip generates a response to the optical signal. In implementations of the disclosure, the outer housing 741 and the cushion 72 are coupled as a whole. In detail, the outer housing 741 and the cushion 72 may be integrally formed; or the outer housing 741 and the cushion 72 are made of different materials and integrally formed in a way such as a two-color injection molding. The outer housing 741 and the cushion 72 may also be formed separately, and formed into a matching structure. When the time-of-flight module 300 is assembled, first one of the outer housing 741 and the cushion 72 may be disposed on the first substrate 711, and then the other one is disposed on the first substrate 711, which are connected as a whole.

In this way, the light emitter 100 is disposed on the cushion 72. The cushion 72 may increase height of the light emitter 100, thereby increasing the height of a surface where the light emitter 100 emits the optical signal, and the optical signals emitted by the light emitter 100 are not easily shielded by the light receiver 200, such that the optical signal may be completely irradiated on a measured object in the target space.

Please refer to FIG. 2, the light receiver 100 includes the light source 10, the diffuser 20, the lens barrel 30, the protective cover 40, the circuit board 50, the driver 61, and the light detector 63.

The lens barrel 30 includes an annular lens-barrel sidewall 33. The annular lens-barrel sidewall 33 encloses a receiving cavity 62. The lens-barrel sidewall 33 includes an inner surface 331 located within the receiving cavity 62 and an outer surface 332 opposite to the inner surface. The lens-barrel sidewall 33 includes a first surface 31 and a second surface 32 opposite to each other. The receiving cavity 62 penetrates through the first surface 31 and the second surface 32. The first surface 31 is recessed toward the second surface 32 to form a mounting groove 34 communicated with the receiving cavity 62. A bottom surface 35 of the mounting slot 34 is located on a side of the mounting slot 34 away from the first surface 31. An outer surface 332 of the lens-barrel sidewall 33 has a circular cross section at one end of the first face 31, and the outer surface 332 of the lens-barrel sidewall 33 forms an external thread at one end of the first face 31.

The circuit board 50 is disposed on the second surface 32 of the lens barrel 30 and encloses one end of the receiving cavity 62. The circuit board 50 may be a flexible printed circuit board or a printed circuit board.

The light source 10 is carried on the circuit board 50 and accommodated in the receiving cavity 62. The light source 10 is used to emit optical signals toward the first surface 31 (mounting groove 34) side of the lens barrel 30. The light source 10 may be a vertical-cavity surface laser (VCSEL). Height of the vertical cavity surface emitter laser is small, and the vertical cavity surface emitter is taken as the light source 10, which facilitates to reduce the height of the light emitter 100 and facilitates the light emitter 100 to be integrated into an electronic device 800 such as a mobile phone that has a high requirement on a body thickness.

The driver 61 is carried on the circuit board 50 and electrically connected to the light source 10. In detail, the driver 61 may receive an input signal modulated by the processor 805 or the calibration controller 806, convert the input signal into a constant current source and then transmit the constant current source to the light source 10, such that the light source 10 emits the optical signals toward the first surface 31 of the lens barrel 30 under action of the constant current source. In this implementation, the driver 61 is disposed outside the lens barrel 30. In other implementations, the driver 61 may be disposed within the lens barrel 30 and carried on the circuit board 50.

The diffuser 20 is disposed (carried) in the mounting groove 34 and collides with the mounting groove 34. The diffuser 20 is configured to diffuse the optical signals passing through the diffuser 20. That is, the optical signals may pass through the diffuser 20 and be diffused by the diffuser 20 or projected out of the lens barrel 30 when the light source 10 emits the optical signal toward the first surface 31 of the lens barrel 30.

The protective cover 40 includes a top wall 41 and a protective sidewall 42 extending from one side of the top wall 41. A center of the top wall 41 is disposed with a light emitting hole 401. The light-transmitting hole 401 is disposed with a light emitting plate. The protective sidewall 42 is disposed around the top wall 41 and the light emitting hole 401. The mounting cavity 43 are enclosed by the top wall 41 and the protective sidewall 42 together, and the light emitting hole 401 communicates with the mounting cavity 43. A cross section of the inner surface of the protective sidewall 42 is circular, and internal threads are formed on the inner surface of the protective sidewall 42. The inner thread of the protective sidewall 42 is screwed with the outer thread of the lens barrel 30 to mount the protective cover 40 on the lens barrel 30. The collision between the top wall 41 and the diffuser 20 causes the diffuser 40 to be clamped between the top wall 41 and the bottom surface 35 of the mounting groove 34.

In this way, the diffuser 20 is disposed in the mounting groove 34 by opening the mounting groove 34 on the lens barrel 30, and the diffuser 20 is clamped between the protective cover 40 and the bottom surface 35 of the mounting groove 34 by disposing the protective cover 40 on the lens barrel 30, such that the diffuser 20 is fixed on the lens barrel 30. In this way, the diffuser 20 is fixed on the lens barrel 30 without glue, which may prevent gas glue from diffusing and solidifying on the surface of the diffuser 20 after the glue is volatilized into gaseous state, and affecting a microstructure of the diffuser 20. The diffuser 20 may also be prevented from falling off the lens barrel 30 when an adhesive force of the glue between the diffuser 20 and the lens barrel 30 decreases due to aging.

In the description of the disclosure, reference throughout this specification to "an embodiment," "some embodiments," "an example," "a specific example," or "some examples," means that a particular feature, structure, material or feature described in connection with the embodiment or example is included in at least one embodiment or example of the disclosure. The appearances of the above phrases throughout this specification are not necessarily referring to the same embodiment or example. Moreover, the particular feature, structure, material or feature described may be combined in any one or more embodiments or examples in a suitable manner. Furthermore, without contradicting each other, the skilled in the art may combine different embodiments or examples described in this specification and features of different embodiments or examples.

In addition, the terms "first" and "second" are only for description purpose, and cannot be understood as indicating or implying relative importance or implicitly indicating the number of indicated technical features. Therefore, the features defined with "first" and "second" can include at least one of the features explicitly or implicitly. In addition, in the description of the disclosure, the term "a plurality of' means two or more, such as two and three, unless specified otherwise.

Any procedure or method described in a flow chart or described herein in other ways may be understood to include one or more modules, segments or portions of codes of executable instructions for achieving specific logical functions or steps in the procedure, and the scope of a preferred embodiment of the disclosure includes other implementations. The order of execution is different from that which is depicted or discussed, including executing functions in a substantially simultaneous manner or in an opposite order according to the related functions, which should be understood by those skilled in the art which embodiments of the disclosure belong to.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More detailed examples of the computer readable medium include, but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memory.

It should be understood that each part of the disclosure may be realized by the hardware, software, firmware or their combination. In the above implementations, multiple steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discretely logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above embodiment method may be achieved by commanding the related hardware with a program. The program may be stored in a computer readable storage medium, and the program includes one or a combination of the steps in the method embodiments when operated on a computer.

In addition, each function unit of each embodiment of the disclosure may be integrated in a processing module, or these units may be separate physical existence, or two or more units are integrated in a processing module. The integrated module may be realized in a form of hardware or in a form of software function modules. When the integrated module is realized in the form of software function module and is sold or used as a standalone product, the integrated module may be stored in a computer readable storage medium.

The storage medium mentioned above may be a read-only memory, a magnetic disk or CD, etc. Although embodiments of the disclosure have been shown and described above, it should be understood that the above embodiments are exemplary and should not be construed as limiting the disclosure. The skilled in the art can make changes, modifications, substitutions and variations to the above embodiments within the scope of the disclosure.

## Claims

1. A method for calibrating a time-of-flight module, the time-of-flight module comprising a light emitter and a light detector, the light emitter comprising a light source, the time-of-flight module being disposed on an electronic device, and the electronic device comprising an optical element, wherein the method comprises:
controlling the light source to emit optical signals at a predetermined working current; and
controlling the light detector to receive the optical signals reflected by the optical element to form calibration electrical signals.

2. The method of claim 1, the optical element comprising a diffuser of the light emitter, wherein the controlling the light detector to receive the optical signals reflected by the optical element to form the calibration electrical signals comprises:
controlling the light detector to receive the optical signals reflected by the diffuser to form the calibration electrical signals.

3. The method of claim 2, the optical element further comprising a protective cover, wherein the controlling the light detector to receive the optical signals reflected by the optical element to form the calibration electrical signals comprises:
controlling the light detector to receive the optical signals reflected by the diffuser and the protective cover to form the calibration electrical signals.

4. The method of claim 2, the optical element further comprising a cover plate, wherein the controlling the light detector to receive the optical signals reflected by the optical element to form the calibration electrical signals comprises:
controlling the light detector to receive the optical signals reflected by the diffuser and the cover plate to form the calibration electrical signals.

5. The method of claim 3, the optical element further comprising a cover plate, wherein the controlling the light detector to receive the optical signals reflected by the optical element to form the calibration electrical signals comprises:
controlling the light detector to receive the optical signals reflected by the diffuser, the protective cover, and the cover plate to form the calibration electrical signals.

6. The method of claim 1, the light emitter comprising a plurality of light emitting elements, the plurality of light emitting elements being divided into a plurality of light-emitting element groups, and the light detector comprising a plurality of light detecting elements each corresponding to each light-emitting element group, wherein the controlling the light source to emit the optical signals at the predetermined working current comprises:
controlling light emitting elements in the plurality of light-emitting element groups to simultaneously emit the optical signals; and
the controlling the light detector to receive the optical signals reflected by the optical element to form the calibration electrical signals comprises:
controlling the plurality of light detecting elements to correspondingly receive the optical signals emitted by the plurality of light-emitting element groups, and to convert the optical signals into a plurality of electrical signals as the calibration electrical signals corresponding to the plurality of light-emitting element groups.

7. The method of claim 1, the light emitter comprising a plurality of light emitting elements, the plurality of light emitting elements being divided into a plurality of light-emitting element groups, and the light detector comprising a plurality of light detecting elements each corresponding to each light-emitting element group, wherein the controlling the light source to emit the optical signals at the predetermined working current comprises:
controlling light emitting elements in the plurality of light-emitting element groups to respectively emit the optical signals at different times; and
the controlling the light detector to receive the optical signals reflected by the optical element to form the calibration electrical signals comprises:
controlling the plurality of light detecting elements to be turned on sequentially, wherein each light detecting element is turned on in response to turning on of the corresponding light-emitting element group , and controlling each turned on light detecting element to receive the optical signals emitted by the light emitting elements in the turned on light-emitting element group, and to convert the optical signals into an electrical signal as the calibration electrical signal corresponding to the light-emitting element group.

8. The method of claim 1, the light emitter comprising a plurality of light emitting elements, the plurality of light emitting elements being divided into a plurality of light-emitting element groups, and the light detector comprising a plurality of light detecting elements each corresponding to each light-emitting element group, wherein the controlling the light source to emit the optical signals at the predetermined working current comprises:
controlling light emitting elements in the plurality of light-emitting element groups to respectively emit the optical signals at different times; and
the controlling the light detector to receive the optical signals reflected by the optical element to form the calibration electrical signals comprises:
controlling the plurality of light detecting elements to be turned on simultaneously and to sequentially receive the optical signals each group emitted by the light emitting elements in the turned on light-emitting element group, and to convert the optical signals into a plurality of electrical signals; and
obtaining the calibration electrical signal corresponding to each light-emitting element group based on the plurality of electrical signals each corresponding to each light-emitting element group and a weight corresponding to each electrical signal.

9. The method of claim 1, before controlling the light source to emit the optical signals at the predetermined working current, further comprising:
calculating the predetermined working current based on a preset distance.

10. A calibration controller, applied to a time-of-flight module, wherein the time-of-flight module comprises a light emitter and a light detector, the light emitter comprises a light source, the time-of-flight module is disposed on an electronic device, the electronic device comprises an optical element, and the calibration controller is configured to:
control the light source to emit optical signals at a predetermined working current; and
control the light detector to receive the optical signals reflected by the optical element to form calibration electrical signals.

11. The calibration controller of claim 10, wherein the optical element comprises a diffuser of the light emitter, and the calibration controller is further configured to:
control the light detector to receive the optical signals reflected by the diffuser to form the calibration electrical signals.

12. The calibration controller of claim 11, wherein the optical element further comprises a protective cover, and the calibration controller is further configured to:
control the light detector to receive the optical signals reflected by the diffuser and the protective cover to form the calibration electrical signals.

13. The calibration controller of claim 11, wherein the optical element further comprises a cover plate, and the calibration controller is further configured to:
control the light detector to receive the optical signals reflected by the diffuser and the cover plate to form the calibration electrical signals.

14. The calibration controller of claim 12, wherein the optical element further comprises a cover plate, and the calibration controller is further configured to:
control the light detector to receive the optical signals reflected by the diffuser, the protective cover, and the cover plate to form the calibration electrical signals.

15. The calibration controller of claim 10, wherein the light emitter comprises a plurality of light emitting elements, the plurality of light emitting elements are divided into a plurality of light-emitting element groups, the light detector comprises a plurality of light detecting elements each corresponding to each light-emitting element group, and the calibration controller is further configured to:
control light emitting elements in the plurality of light-emitting element groups to simultaneously emit the optical signals; and
control the plurality of light detecting elements to correspondingly receive the optical signals emitted by the plurality of light-emitting element groups, and to convert the optical signals into a plurality of electrical signals as the calibration electrical signals corresponding to the plurality of light-emitting element groups.

16. The calibration controller of claim 10, wherein the light emitter comprises a plurality of light emitting elements, the plurality of light emitting elements are divided into a plurality of light-emitting element groups, the light detector comprises a plurality of light detecting elements each corresponding to each light-emitting element group, and the calibration controller is further configured to:
control light emitting elements in the plurality of light-emitting element groups to respectively emit the optical signals at different times; and
control the plurality of the light detecting elements to be turned on sequentially, wherein each light detecting element is turned on in response to turning on of the corresponding light-emitting element group, and to receive the optical signals emitted by the light emitting elements in the turned on light-emitting element group, and to convert the optical signals into an electrical signal as the calibration electrical signal corresponding to the light-emitting element group.

17. The calibration controller of claim 10, wherein the light emitter comprises a plurality of light emitting elements, the plurality of light emitting elements are divided into a plurality of light-emitting element groups, the light detector comprises a plurality of light detecting elements each corresponding to each light-emitting element group, and the calibration controller is further configured to:
control light emitting elements in the plurality of light-emitting element groups to respectively emit the optical signals at different times;
control the plurality of light detecting elements to be turned on simultaneously and to sequentially receive the optical signals each group emitted by the light emitting elements in the turned on light-emitting element group, and to convert the optical signals into a plurality of electrical signals; and
obtain the calibration electrical signal corresponding to each light-emitting element group based on the plurality of electrical signals each corresponding to each light-emitting element group and a weight corresponding to each electrical signal.

18. The calibration controller of claim 10, wherein the calibration controller is further configured to: calculate the predetermined working current based on a preset distance.

19. A calibration system, comprising:
a time-of-flight module, comprising a light emitter and a light detector;
an electronic device having the time-of-flight module disposed thereon, and comprising an optical element; and
a calibration controller, configured to:
control a light source to emit optical signals at a predetermined working current; and
control the light detector to receive the optical signals reflected by the optical element to form calibration electrical signals.

20. The calibration system of claim 19, wherein the optical element comprises a diffuser of the light emitter, and the calibration controller is further configured to:
control the light detector to receive the optical signals reflected by the diffuser to form the calibration electrical signals.

21. The calibration system of claim 20, wherein the optical element further comprises a protective cover, and the calibration controller is further configured to:
control the light detector to receive the optical signals reflected by the diffuser and the protective cover to form the calibration electrical signals.

22. The calibration system of claim 20, wherein the optical element further comprises a cover plate, and the calibration controller is further configured to:
control the light detector to receive the optical signals reflected by the diffuser and the cover plate to form the calibration electrical signals.

23. The calibration system of claim 21, wherein the optical element further comprises a cover plate, and the calibration controller is further configured to:
control the light detector to receive the optical signals reflected by the diffuser, the protective cover, and the cover plate to form the calibration electrical signals.

24. The calibration system of claim 19, wherein the light emitter comprises a plurality of light emitting elements, the plurality of light emitting elements are divided into a plurality of light-emitting element groups, the light detector comprises a plurality of light detecting elements each corresponding to each light-emitting element group, and the calibration controller is further configured to:
control light emitting elements in the plurality of light-emitting element groups to simultaneously emit the optical signals; and
control the plurality of light detecting elements to correspondingly receive the optical signals emitted by the plurality of light-emitting element groups, and to convert the optical signals into a plurality of electrical signals as the calibration electrical signals corresponding to the plurality of light-emitting element groups.

25. The calibration system of claim 19, wherein the light emitter comprises a plurality of light emitting elements, the plurality of light emitting elements are divided into a plurality of light-emitting element groups, the light detector comprises a plurality of light detecting elements each corresponding to each light-emitting element group, and the calibration controller is further configured to:
control light emitting elements in the plurality of light-emitting element groups to respectively emit the optical signals at different times; and
control the plurality of the light detecting elements to be turned on sequentially, wherein each light detecting element is turned on in response to turning on of the corresponding light-emitting element group, and to receive the optical signals emitted by the light emitting elements in the turned on light-emitting element group, and to convert the optical signals into an electrical signal as the calibration electrical signal corresponding to the light-emitting element group.

26. The calibration system of claim 19, wherein the light emitter comprises a plurality of light emitting elements, the plurality of light emitting elements are divided into a plurality of light-emitting element groups, the light detector comprises a plurality of light detecting elements each corresponding to each light-emitting element group, and the calibration controller is further configured to:
control light emitting elements in the plurality of light-emitting element groups to respectively emit the optical signals at different times;
control the plurality of light detecting elements to be turned on simultaneously and to sequentially receive the optical signals each group emitted by the light emitting elements in the turned on light-emitting element group, and to convert the optical signals into a plurality of electrical signals; and
obtain the calibration electrical signal corresponding to each light-emitting element group based on the plurality of electrical signals each corresponding to each light-emitting element group and a weight corresponding to each electrical signal.

27. The calibration system of claim 19, wherein the calibration controller is further configured to: calculate the predetermined working current based on a preset distance.
